**Europäisches Patentamt**

**European Patent Office**

**Office européen des brevets**

(19)

(11) Veröffentlichungsnummer: **0 013 970 B1**

(12)

# EUROPÄISCHE PATENTSCHRIFT

(45) Veröffentlichungstag der Patentschrift:
01.07.81

(51) Int. Cl.³: **B 60 J 1/02**

(21) Anmeldenummer: **80100306.2**

(22) Anmeldetag: **22.01.80**

(54) Windschutzscheibe für Kraftfahrzeuge und Verfahren zu ihrer Herstellung.

(30) Priorität: **25.01.79 DE 2902748**

(43) Veröffentlichungstag der Anmeldung:
**06.08.80 Patentblatt 80/16**

(45) Bekanntmachung des Hinweises auf die Patenterteilung:
**01.07.81 Patentblatt 81/26**

(84) Benannte Vertragsstaaten:
**AT BE CH DE FR GB IT LU NL SE**

(56) Entgegenhaltungen:
**DE-A-2 248 094**
**DE-B-1 911 561**
**DE-B1-2 507 037**
**US-A-2 895 157**

(73) Patentinhaber: **Saint-Gobain Vitrage, 62, Bd. Victor-Hugo, F-92209 Neuilly-sur-Seine (FR)**
(84) Benannte Vertragsstaaten: **BE CH FR GB IT LU NL SE AT**

(73) Patentinhaber: **Vereinigte Glaswerke GmbH, Viktoriaallee 3-5, D-5100 Aachen (DE)**
(84) Benannte Vertragsstaaten: **DE**

(72) Erfinder: **Krasborn, Gottfried, Ing., Bismarckstrasse 12, D-5100 Aachen (DE)**
Erfinder: **Roentgen, Paul, Ing., Talweg 7, D-5101 Roetgen/Rott (DE)**
Erfinder: **Meier, Wilhelm, Niemöllerstrasse 27, D-5120 Kohlscheid (DE)**
Erfinder: **Erdweg, Josef, Jülicherstrasse 427, D-5100 Aachen (DE)**

(74) Vertreter: **Biermann, Wilhelm, Dr.-Ing., Vereinigte Glaswerke GmbH Viktoriaallee 3-5, D-5100 Aachen (DE)**

Windschutzscheibe für Kraftfahrzeuge und Verfahren zu ihrer Herstellung

Die Erfindung betrifft eine Windschutzscheibe für Kraftfahrzeuge, deren unterer Bereich zur Ablage der Scheibenwischer in ihrer Ruhestellung dient, die unterhalb des Niveaus der Motorhaube versenkt angeordnet sind.

Bei Kraftfahrzeugen mit unterhalb des Niveaus der Motorhaube versenkten Scheibenwischern (US-A 2 895 157) besteht in besonderem Maße die Gefahr, daß während der kalten Jahreszeit der Scheibenwischer in seiner Ruhestellung auf der Windschutzscheibe blockiert wird. Insbesondere kann es bei Schneefall vorkommen, daß der von der Windschutzscheibe herunterrutschende Schnee sich in der für die Anordnung des Scheibenwischers notwendigen Vertiefung festsetzt und so die Funktion des Scheibenwischers beeinträchtigt.

Der Erfindung liegt die Aufgabe zugrunde, eine für den in die Motorhaube versenkten Einbau geeignete Windschutzscheibe der eingangs genannten Art so auszubilden, daß der bzw. die Scheibenwischer ihre Funktion auch in der kalten Jahreszeit einwandfrei erfüllen können.

Die Erfindung besteht darin, daß in an sich bekannter Weise (DE-B1-2 507 037) der untere Bereich der Windschutzscheibe mit einem elektrischen Heizwiderstand versehen ist, und daß der mit dem Heizwiderstand versehene Bereich in einer zwischen dem Heizwiderstand und den Scheibenwischern liegenden Ebene mit einer undurchsichtigen und Strahlungswärme absorbierenden Schicht versehen ist.

Durch die erfindungsgemäße Ausbildung der Windschutzscheibe werden folgende Vorteile erzielt:

— Der von dem Heizwiderstand ausgehende Strahlungsanteil der entwickelten Wärme erhöht die Temperatur der Glasoberfläche, auf der die Scheibenwischer abliegen, so daß der Wirkungsgrad der Scheibenheizung erhöht wird.
— Da die absorbierende Schicht gleichzeitig undurchsichtig ist, wird der Blick von außen auf den Heizwiderstand verdeckt. Das ermöglicht die Verwendung von Heizleitern, die bei sichtbarer Anordnung das Bild stören.
— Die undurchsichtige Schicht verhindert den Durchblick von außen auf die hinter diesem Teil der Windschutzscheibe liegenden Teile der Karosserie. Das ist deswegen vorteilhaft, weil diese hinter der Windschutzscheibe liegenden Teile der Karosserie schwer zugänglich sind, so daß Verschmutzungen dort praktisch nicht beseitigt werden können und durch die Windschutzscheibe hindurch sichtbar bleiben würden.
— Die undurchsichtige Schicht kann sich so weit nach oben erstrecken, daß sie in dem Fall, daß die Windschutzscheibe oberhalb des Heizfeldes mit der Karosserie mit Hilfe einer Klebemasse verklebt wird, die in aller Regel ungleichmäßig verlaufende Kontur der Klebemasse verdeckt.

Gemäß einer ersten Ausführungsform der Erfindung ist die Windschutzscheibe eine Verbundglasscheibe mit in der thermoplastischen Zwischenschicht eingelegten Widerstandsdrähten, und die undurchsichtige und Wärmestrahlen absorbierende Schicht ist auf der äußeren Silikatglasscheibe angeordnet, wobei sie entweder auf der an der thermoplastischen Zwischenschicht anliegenden oder auf der von dieser abgewandten Oberfläche angeordnet sein kann. Bei Anordnung der undurchsichtigen Schicht auf der freien Oberfläche, auf der unmittelbar die Scheibenwischer abliegen, muß diese Schicht aus dauerhaftem und abriebfestem Material, beispielsweise einer Emailschicht, bestehen.

Nach einer bevorzugten Ausführungsform besteht der elektrische Heizwiderstand aus bei erhöhtem Temperaturen eingebrannten Heizleitern aus einer emailartigen Zusammensetzung, und auch die undurchsichtige und Wärmestrahlen absorbierende Schicht ist eine bei erhöhten Temperaturen eingebrannte emailartige Schicht. Der Heizwiderstand kann aber auch aus einer ununterbrochenen Metall- oder Halbleiterschicht bestehen.

Wenn diese Schichten auf der hinteren Außenfläche, d. h. auf der von den Scheibenwischern abgewandten Oberfläche der Windschutzscheibe angeordnet sind, ist zweckmäßigerweise auf den elektrischen Heizleitern, die unter Zwischenschaltung der undurchsichtigen Schicht auf der Glasoberfläche angeordnet sind, eine weitere emailartige Schicht angeordnet. Diese über den Heizleitern angeordnete Schicht dient als Schutzschicht für die Heizleiter gegen einen korrodierenden Angriff durch die Atmosphäre, der die Heizleiter andernfalls unmittelbar ausgesetzt wären.

Es ist in zweckmäßiger Weiterbildung der Erfindung vorteilhaft, wenn die zwischen dem Scheibenwischer und dem Heizwiderstand angeordnete lichtundurchlässige und Wärmestrahlen absorbierende Schicht eine Wärmeleitfähigkeit aufweist, die gleich oder größer derjenigen der Glasscheiben ist. Falls der Heizwiderstand zwischen zwei undurchsichtigen Schichten angeordnet ist, kann die dem Scheibenwischer abgewandte undurchsichtige Schicht eine geringere Wärmeleitfähigkeit aufweisen als die zwischen Heizleiter und Scheibenwischer angeordnete undurchsichtige Schicht.

Gegenstand der Erfindung ist ebenfalls ein Verfahren zur Herstellung einer bevorzugten Ausführungsform der erfindungsgemäßen Windschutzscheibe, wobei das Verfahren darin besteht, auf die Oberfläche einer Silikatglasscheibe zunächst eine zusammenhängende geschlossene Schicht einer druckfähigen Einbrennpaste mit Hilfe des Siebdruckverfahrens aufzutragen, die Schicht zu trocknen, auf diese getrocknete Schicht die Heizleiter aufzudrucken und zu trocknen, und auf die Heizleiter gegebenenfalls eine weitere zusammenhängende Schicht einer druckfähigen Einbrennpaste nach dem Siebdruckverfahren aufzutragen, und die übereinander gedruckten Schichten in einem einzigen Wärmebehandlungsprozeß einzubrennen.

Weitere Merkmale und Vorteile der Erfindung ergeben sich aus den Ansprüchen und der nachfolgenden Beschreibung, in der anhand der Zeichnungen verschiedene Ausführungsbeispiele erläutert werden. Von den Zeichnungen zeigt

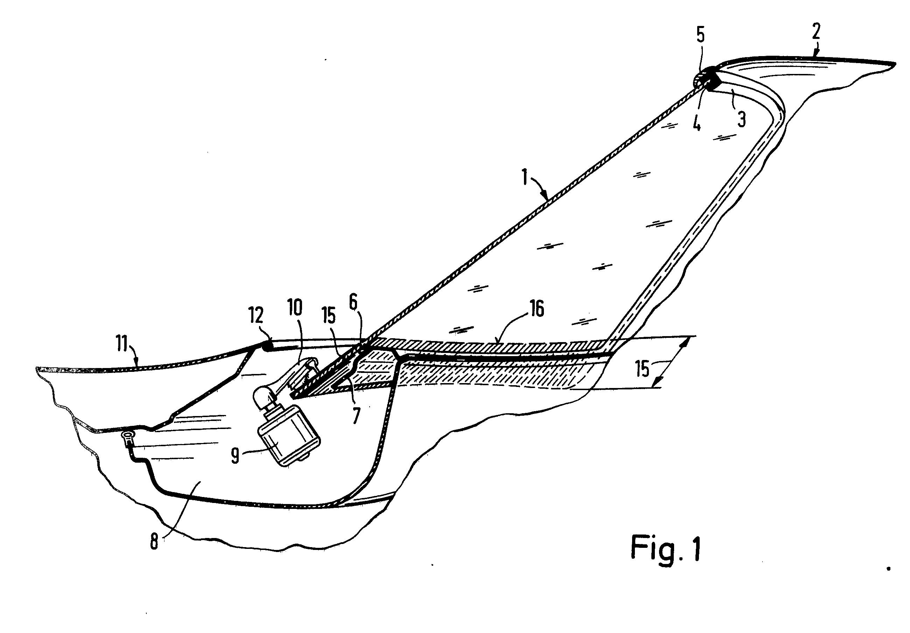

Fig. 1 eine erfindungsgemäße Windschutzscheibe in eingebautem Zustand, dargestellt als Teil eines vertikalen Längsschnittes entlang der Mittelachse eines Kraftfahrzeuges;

Fig. 2 eine erste Ausführungsform der erfindungsgemäßen Windschutzscheibe, teilweise dargestellt als Explosionszeichnung, und

Fig. 3 eine andere Ausführungsform der erfindungsgemäßen Windschutzscheibe, ebenfalls teilweise als Explosionszeichnung dargestellt.

Die Windschutzscheibe 1 ist oben und an den Seiten in dem an dem Karosserieblech 2 angeformten Rahmen 3 angeordnet. Zur Befestigung in dem Rahmen 3 dient die Klebeschnur 4. Ein Zierprofil 5 deckt oben und an den Seiten die Klebeschicht nach außen hin ab. Unten ist die Windschutzscheibe 1 mit Hilfe der Klebeschnur 6 mit dem den Fensterausschnitt der Karosserie unten begrenzenden Holm 7 verklebt.

Die Windschutzscheibe 1 setzt sich nach unten über die Verbindungslinie mit der Karosserie hinaus fort und ragt in den Hohlraum 8 hinein, in dem der Scheibenwischermotor 9 angeordnet ist. Die Scheibenwischer 10 liegen in ihrer Ruhestellung auf diesem unteren, in den Hohlraum 8 hineinragenden Teil der Windschutzscheibe 1. Die Motorhaube 11 endet in einem solchen Abstand von der Windschutzscheibe 1, daß die Scheibenwischer durch den verbleibenden Spalt heraustreten können. In der dargestellten Ruhestellung befinden sich die Scheibenwischer 10 in versenkter Stellung, d. h. unterhalb der Kante 12 der Motorhaube 11, so daß sie von vorn nicht sichtbar sind und auch kein Hindernis für die Luftströmung entlang der Windschutzscheibe darstellen.

Die Windschutzscheibe 1 ist in ihrem unteren für die Ablage der Scheibenwischer 10 bestimmten Bereich 15 elektrisch beheizbar ausgebildet und mit einer undurchsichtigen Schicht versehen. Die undurchsichtige Schicht erstreckt sich nach oben bis über die Klebeschnur 6 hinaus, so daß die obere Begrenzung 16 oberhalb der oberen Kante der Klebeschnur 16 verläuft.

Auf diese Weise ist der Klebestreifen an dieser Stelle, an der ein Zierprofil nicht angeordnet werden kann, durch die undurchsichtige Schicht verdeckt.

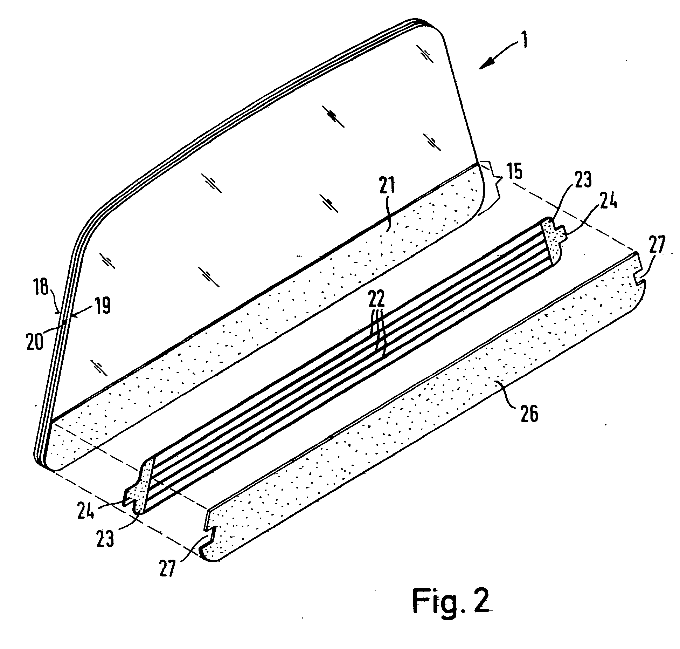

Der Aufbau der Windschutzscheibe 1 ergibt sich aus der Fig. 2, in der der Schichtaufbau teils als Explosionszeichnung dargestellt ist. Die hier dargestellte Windschutzscheibe 1 ist eine Verbundglasscheibe, die aus einer äußeren Silikatglasscheibe 18, einer inneren Silikatglasscheibe 19 und einer diese beiden Silikatglasscheiben miteinander verbindenden thermoplastischen Zwischenschicht 20 aus Polyvinylbutyral besteht. Auf der inneren Silikatglasscheibe 19 ist im unteren Bereich 15, der etwa ein Fünftel der Gesamthöhe der Windschutzscheibe umfaßt, eine Wärmestrahlen absorbierende und lichtundurchlässige geschlossene Schicht 21 aus einem dunklen, vorzugsweise schwarzen Email angeordnet. Auf dieser Emailschicht 21 sitzt eine zweite, die Heizleiter 22 und die seitlichen Sammelschienen 23 umfassende Schicht, die mit der darunter liegenden Emailschicht 21 fest verbunden ist. Heizleiter 22 und Sammelschienen 23 bestehen wie üblich aus einer emailartigen Leitmetall-, insbesondere Leitsilberzusammensetzung. Die Sammelschienen 23 haben, falls sie für das Auflöten von Anschlußelementen nicht breit genug sind, flächenartige Erweiterungen 24, auf denen die als solche nicht dargestellten Anschlußelemente aufgelötet sind.

Auf den Heizleitern 22 und den Sammelschienen 23 ist eine ununterbrochene Schicht 26 angeordnet, die aus demselben Material besteht wie die unmittelbar auf der Glasoberfläche sitzende Schicht 21. Diese Schicht 26 weist an den Seiten Aussparungen 27 auf, um die Flächen 24 für das Auflöten der Anschlußelemente freizuhalten.

Die Schichten 21 bis 26 sind in dem in Fig. 2 dargestellten Fall auf der äußeren Oberfläche der inneren Glasscheibe 19 angeordnet. Sie werden vor dem Biegen der Silikatglasscheiben 18 und 19 nacheinander auf die Glasscheibe 19 mit Hilfe des Siebdruckverfahrens aufgebracht, nachdem die jeweils zuvor aufgebrachte Schicht zunächst getrocknet wurde. Die drei nacheinander aufgebrachten Schichten werden während der Wärmebehandlung der beiden aufeinander gelegten Glasscheiben 18, 19 im Biegeofen, wo die Glasscheiben bis auf Erweichungstemperatur erwärmt werden, zusammen eingebrannt und verschmelzen zu einem zusammenhängenden und in der Glasoberfläche verankerten Schichtaufbau.

Die wärmeabsorbierende Schicht 21 entspricht in ihrer flächenmäßigen Ausdehnung der flächenmäßigen Ausdehnung der Heizleiter 22 einschließlich der Sammelschienen 23. Da bei der in Fig. 2 dargestellten Ausführungsform sich die Heizleiter 22 über die gesamte Scheibenbreite erstrecken, ist die Anordnung dieser Schichten auf einer der thermoplastischen Zwischenschicht 20 anliegenden Oberfläche der Silikatglasscheiben 18 oder 19 dann nicht ohne Probleme, wenn die beiden Silikatglasscheiben paarweise gebogen werden. Es besteht dann nämlich die Gefahr, daß beim Aufschmelzen und Einbrennen der Schichten eine Verklebung bzw. stellenweise Verankerung auch mit der anderen Glasscheibe erfolgt, so daß die Trennung der beiden Glasscheiben nach dem gemeinsamen Biegen Schwierigkeiten macht.

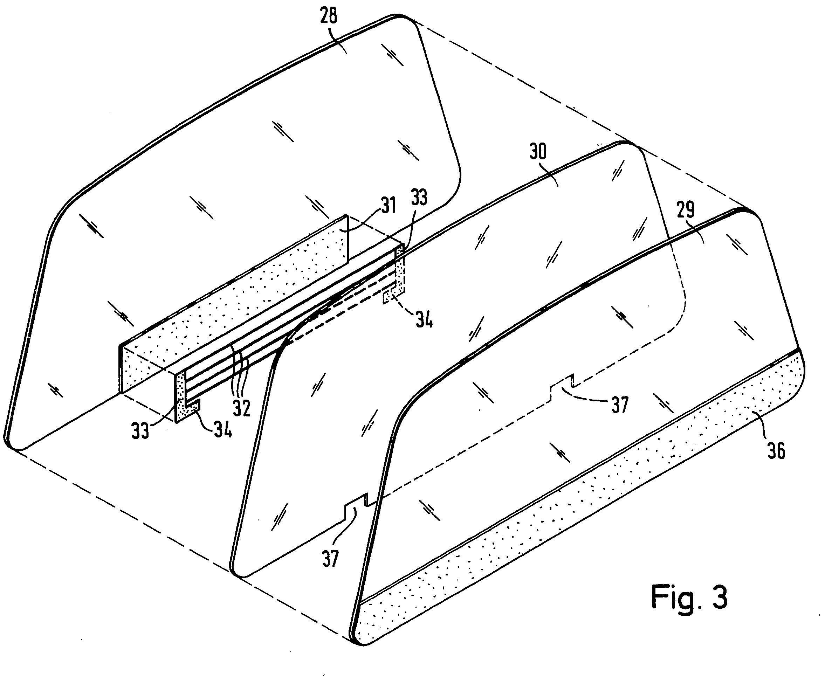

Um diesem Problem zu begegnen, kann man, sofern man die Heizleiter auf der energetisch günstigeren Außenscheibe anordnen will, die in Fig. 3 dargestellte Ausführungsform wählen. Voraussetzung hierbei ist aber, daß der Ablagebereich der Scheibenwischer in ihrer Ruhestellung sich in der Scheibenmitte befindet, so daß die Beheizung nur in der Scheibenmitte erforderlich ist.

Die Ausführungsform nach Fig. 3 ist wiederum als Explosionszeichnung dargestellt. Die äußere Silikatglasscheibe 28 ist mit der inneren Silikatglasscheibe 29 über die thermoplastische Zwischenschicht 30 aus Polyvinylbutyral verbunden.

Auf die plane Glasscheibe 28 wird in dem für die Beheizung vorgesehenen mittleren Bereich eine geschlossene Schicht 31 aus einer druckfähigen schwarzen keramischen Farbe mit Hilfe des Siebdruckverfahrens aufgetragen. Nach dem Trocknen dieser Schicht 31 werden die Heizleiter 32 und die Sammelschienen 33 aus einer druckfähigen Silberpaste ebenfalls mit Hilfe des Siebdruckverfahrens aufgetragen. Die Anschlußflächen 34 an den Sammelschienen 33 sind am unteren Rand der Glasscheibe angeordnet.

Auf die innere Glasscheibe 29 wird sodann auf deren äußere Oberfläche eine Schicht 36 aus der gleichen keramischen Farbe, aus der die Schicht 31 besteht, mit Hilfe des Siebdruckverfahrens aufgetragen. Diese Schicht 36 erstreckt sich über die gesamte Breite der Glasscheibe 29 und bildet die undurchsichtige Schicht, während die Schicht 31 im wesentlichen die Funktion der Wärmestrahlenabsorption übernimmt. Die thermoplastische Zwischenschicht 30 weist gegenüber den Anschlußflächen 34 Aussparungen 37 für die Anschlußelemente auf, die auf die Anschlußflächen 34 aufgelötet werden und deren Kontaktzunge nach unten aus der Verbundglasscheibe herausragt.

Zum gemeinsamen Biegen werden die Glasscheiben 28 und 29 nach dem Aufbringen und Trocknen der Schichten 31, 32, 33 und 36 zusammengelegt. Da beim gemeinsamen Biegen unter Schwerkraftwirkung die beiden Glasscheiben im Mittelfeld wegen der höheren Temperatur der Außenhaut etwas auseinanderklaffen, kommen die Schichten 31, 32 und 33 in dem Temperaturbereich, in dem sie aufschmelzen und in die Oberfläche der Glasscheibe 28 einbrennen, mit der Oberfläche der Glasscheibe 29 nicht in Berührung. Wenn sich später die Glasscheibe 29 nach Ausgleich der Temperatur wieder an die Glasscheibe 28 auch in dem Bereich der Schicht 31 wieder anlegt, sind die Schichten 31, 32, 33 bereits so weit verfestigt, daß sie sich nicht mehr mit der Oberfläche der Glasscheibe 29 verbinden.

Es versteht sich, daß die für die Wärmestrahlen absorbierenden und undurchsichtigen Schichten verwendeten keramischen Farben einerseits und die für den Druck der Heizleiter andererseits verwendeten Silberpasten in ihren Zusammensetzungen so aufeinander abgestimmt sein müssen, daß sie bei gleicher Temperatur ohne gegenseitige Störungen einbrennen.

Solche keramische Produkte sind im Handel erhältlich, beispielsweise bei der Firme BLYTHE COLOURS B.V., und zwar als keramische schwarze Einbrennfarbe mit einem Einbrennbereich zwischen 580 und 620 Grad C unter der Bezeichnung 39.269/63, und als Silberpaste mit einem Einbrennbereich ebenfalls zwischen 580 und 620 Grad C unter der Bezeichnung SMV 197 A/S − 70%/18/63.

## Patentansprüche

1. Windschutzscheibe für Kraftfahrzeuge, deren unterer Bereich zur Ablage der Scheibenwischer (10) in ihrer Ruhestellung dient, die unterhalb des Niveaus der Motorhaube (11) versenkt angeordnet sind, dadurch gekennzeichnet, daß in an sich bekannter Weise der untere, für die Ablage der Scheibenwischer dienende Bereich (15) der Windschutzscheibe (1) mit einem elektrischen Heizwiderstand versehen ist, und daß der mit dem Heizwiderstand versehene Bereich (15) in einer zwischen dem Heizwiderstand und den Scheibenwischern (10) liegenden Ebene mit einer undurchsichtigen und Strahlungswärme absorbierenden Schicht (21; 31) versehen ist.

2. Windschutzscheibe nach Anspruch 1, dadurch gekennzeichnet, daß die Windschutzscheibe eine Verbundglasscheibe mit in der thermoplastischen Zwischenschicht eingelegten Widerstandsdrähten ist, und daß die undurchsichtige und Wärmestrahlen absorbierende Schicht auf der an der thermoplastischen Zwischenschicht anliegenden oder auf der von dieser abgewandten Oberfläche der äußeren Silikatglasscheibe der Verbundglasscheibe angeordnet ist.

3. Windschutzscheibe nach Anspruch 1, dadurch gekennzeichnet, daß der elektrische Heizwiderstand aus bei erhöhten Temperaturen eingebrannten Heizleitern (22; 32) aus einer emailartigen Zusammensetzung besteht.

4. Windschutzscheibe nach Anspruch 1, dadurch gekennzeichnet, daß der elektrische Heizwiderstand aus einer ununterbrochenen Metall- oder Halbleiterschicht besteht.

5. Windschutzscheibe nach Anspruch 3 oder 4, dadurch gekennzeichnet, daß die undurchsichtige Schicht (21; 31) eine bei erhöhten Temperaturen eingebrannte emailartige Schicht ist.

6. Windschutzscheibe nach Anspruch 3, 4 oder 5, dadurch gekennzeichnet, daß die Windschutzscheibe eine Verbundglasscheibe ist, und daß der elektrische Heizwiderstand und die undurchsichtige Schicht auf verschiedene Oberflächen der beiden die Verbundglasscheiben bildenden Silikatglasscheiben angeordnet sind.

7. Windschutzscheibe nach Anspruch 3, 4 oder 5, dadurch gekennzeichnet, daß die undurchsichtige Schicht (21) und der Heizwiderstand auf ein und derselben Silikatglasoberfläche übereinander angeordnet sind.

8. Windschutzscheibe nach Anspruch 7, dadurch gekennzeichnet, daß der elektrische Heizwiderstand zwischen zwei undurchsichtigen Scheiben (21; 26) eingebettet ist.

9. Windschutzscheibe nach einem oder mehreren der Ansprüche 1 bis 8, dadurch gekennzeichnet, daß die undurchsichtige und Wärmestrahlen absorbierende Schicht (21; 31) eine Wärmeleitfähigkeit gleich oder größer derjenigen der Glasscheiben aufweist.

10. Windschutzscheibe nach Anspruch 8 oder 9, dadurch gekennzeichnet, daß die Wärmeleitfähigkeit der dem Scheibenwischer nächstgelegenen undurchsichtigen Schicht (21) größer ist als die Wärmeleitfähigkeit der dem Scheibenwischer abgewandten undurchsichtigen Schicht (26).

11. Verfahren zur Herstellung einer Windschutzscheibe nach einem oder mehreren der Ansprüche 7 bis 10, dadurch gekennzeichnet, daß mit Hilfe des Siebdruckverfahrens zunächst eine ununterbrochene Schicht (21) einer druckfähigen Einbrennpaste aufgetragen, diese Schicht getrocknet, auf die getrocknete Schicht der Heizwiderstand in Form von Heizleitern (22) mit Hilfe des Siebdruckverfahrens aufgebracht, die Heizleiter getrocknet, auf die Heizleiter ggf. eine weitere Schicht (26) nach dem Siebdruckverfahren aufgetragen und getrocknet, und die übereinander aufgedruckten Schichten in einem einzigen Wärmebehandlungsprozeß eingebrannt werden.

## Claims

1. A windshield for motorvehicles, whose lower part ist used to take up the windshield wipers (10) in their resting position, the wipers being placed under the level of the hood (11), characterized in that in a known way the lower part (15), used for taking up the windshield wipers, of the windshield (1) has an electrical heating element and that the part (15), having the heating element, has, in a plane which is between the heating element and the windshield wipers (10), an opaque, heat radiation-absorbing layer (21; 31).

2. A windshield as claimed in claim 1, characterized in that the windshield is a laminated safety glass windshield with heating elements positioned within the thermoplastic inbetween layer and in that the opaque, heat radiation-absorbing layer is placed on the face touching the thermoplastic inbetween layer or facing away therefrom, of the outer silicate glass sheet of the laminated safety glass windshield.

3. A windshield as claimed in claim 1, characterized in that the electrical heating element is made up of heating wires (22; 32), glazed-on at high temperatures, is made up of an enamel-like compound material.

4. A windshield as claimed in claim 1, characterized in that the electrical heating element is made up of an uninterrupted metal or semiconductor layer.

5. A windshield as claimed in claim 3 or claim 4, characterized in that the opaque layer (21; 31) is an enamel-like layer glazed-on at a high temperature.

6. A windshield as claimed in claim 3, 4 or 5, characterized in that the windshield is a laminated safety glass windshield and in that the electrical heating element and the opaque layer are placed on different sides of the two silicate glass sheets forming the laminated safety glass windshield.

7. A windshield as claimed in claim 3, claim 4 or claim 5, characterized in that the opaque layer (21) and the heating element are placed on one and the same side of the silicate glass one over the other.

8. A windshield as claimed in claim 7, characterized in that the electrical heating element is bedded between two opaque plates (21; 26).

9. A windshield as claimed in anyone or more of claims 1 to 8, characterized in that the opaque, heat radiationabsorbing layer (21; 31) has a thermal conductivity equal to or greater than that of the glass sheets.

10. A windshield as claimed in claim 8 or claim 9, characterized in that the thermal conductivity of the opaque layer (21), next to the windshield wiper, is greater than the thermal conductivity of the opaque layer (26) on the side turned away from the wiper.

11. A process for making a windshield as claimed in anyone or more of claims 7 to 10, characterized in that by screen printing firstly an uninterrupted layer (21) of a printingquality glaze paste is put on, this layer is dried, the heating element, in the form of heating wires (22), is placed on the dried layer by screen-printing, the heating wires are dried, if desired a further layer (26) is screen-printed on the heating wires and dried and the layers, printed on top of each other, are glazed on in a single heating process.

## Revendications

1. Pare-brise pour véhicules automobiles dont la zone inférieure est destinée à recevoir, dans leur position de repos, les essuie-glaces (10) qui sont escamotés en dessous du niveau du capot moteur (11), caractérisé en ce que, la zone inférieure (15) du pare-brise (1) destinée à recevoir les essuie-glaces est pourvue, d'une manière connue, d'une résistance électrique chauffante et la zone (15) équipée de la résistance chauffante est pourvue, dans un plan situé entre la résistance chauffante et les essuie-glaces (10), d'une couche (21, 31) opaque et absorbant les rayons caloriques.

2. Pare-brise suivant la revendication 1, caractérisé en ce qu'il est formé d'un volume de verre feuilleté présentant des fils de résistance noyés dans la couche intermédiaire en matière thermoplastique et la couche opaque et absorbant les rayons caloriques est· placée sur la surface du volume de verre silicaté extérieur du pare-brise feuilleté adjacente à la couche intermédiaire thermoplastique ou sur la surface opposée à cette couche intermédiaire.

3. Pare-brise suivant la revendication 1, caractérisé en ce que la résistance électrique chauffante est formée de conducteurs chauffants (22, 32) cuits à haute température et faits d'une composition du type émail.

4. Pare-brise suivant la revendication 1, caractérisé en ce que la résistance électrique chauffante est faite d'une couche métallique ou semi-conductrice ininterrompue.

5. Pare-brise suivant la revendication 3 ou 4, caractérisé en ce que la couche opaque (21, 31) est une couche du type émail cuite à des températures élevées.

6. Pare-brise suivant la revendication 3, 4 ou 5, caractérisé en ce qu'il est en verre feuilleté et la résistance élctrique chauffante, ainsi que la couche opaque sont disposées sur des surfaces différentes des deux volumes de verre silicaté formant le verre feuilleté.

7. Pare-brise suivant la revendication 3, 4 ou 5, caractérisé en ce que la couche opaque (21) et la résistance chauffante sont superposées sur une seule et même surface de verre silicaté.

8. Pare-brise suivant la revendication 7, caractérisé en ce que la résistance électrique chauffante est noyée entre deux couches opaques (21, 26).

9. Pare-brise suivant une ou plusieurs des revendications 1 à 8, caractérisé en ce que la couche opaque et absorbant les rayons caloriques (21, 31) présente une conductibilité thermique égale ou supérieure à celle des volumes de verre.

10. Pare-brise suivant la revendication 8 ou 9, caractérisé en ce que la conductibilité thermique de la couche opaque (21) la plus proche des essuie-glaces est supérieure à celle de la couche opaque (26) opposée aux essuie-glaces.

11. Procédé pour fabriquer un pare-brise suivant une ou plusieurs des revendications 7 à 10, caractérisé en ce qu'on applique par un procédé sérigraphique d'abord une couche ininterrompue (21) d'une pâte à cuire pouvant être imprimée, on sèche cette couche, on applique la résistance chauffante sur la couche séchée sous la forme de conducteurs chauffants (22) par un procédé sérigraphique, on sèche les conducteurs chauffants, on applique sur les conducteurs chauffants le cas échéant une autre couche (26) par un procédé sérigraphique, on la sèche et on cuit les couches pressées l'une sur l'autre en une seule opération de traitement thermique.

Fig. 1

0 013 970

Fig. 2

Fig. 3